# EUROPEAN PATENT APPLICATION

(11) **EP 4 836 358 A1**
(43) Date of publication of application: **04.11.2026**
(21) Application number: 25173339.0
(22) Date of filing: 29.04.2025
(51) Int. Cl.: H04L 12/10, H04L 12/40

(54) **ELECTRICAL SYSTEMS AND METHODS**

(71) Applicant: Thermo King LLC, Minneapolis, MN 55420 (US)
(72) Inventor: GORSKI, Matthias, Bochum (DE); BENDRAT, Florian, Recklinghausen (DE)
(74) Representative: Haseltine Lake Kempner LLP

(57) **Abstract**

The present disclosure relates to a method 500 of operating an electrical system 200 for a vehicle 10, the electrical system 200 comprising: a controller area network (CAN) bus 270; a CAN transceiver (289) configured to transmit signals on, and receive signals from, the CAN bus; a non-isolated power supply 250, and an isolated power supply 260. The method 500 comprises switching between operating the electrical system 200 in a first mode 510 and a second mode 520. When in the first mode 510, the CAN bus 270 receives electrical power from the non-isolated power supply 250. When in the second mode 520, the CAN bus 270 receives electrical power from the isolated power supply 260.

## Description

### FIELD OF THE INVENTION

The present disclosure relates to a method operating an electrical system for a vehicle. The present disclosure relates further to an electrical system comprising a controller area network (CAN) bus, a CAN transceiver configured to transmit signals on, and receive signals from, the CAN bus, a non-isolated power supply, an isolated power supply, and means configured to carry out such a method.

### BACKGROUND OF THE INVENTION

It is known to provide an electrical system comprising a controller, a DC link, an inverter and an electric motor having a rotor which is coupled to a mechanical load. The electrical system may generally be configured to drive the mechanical load. The mechanical load may be, for instance, a compressor or a fan associated with a refrigeration circuit of a transport refrigeration system. The inverter may be configured to communicate with a controller of the system using a controller area network (CAN) bus.

Common mode (CM) interference on the CAN bus may develop when the inverter is running and a closed loop is formed between the CAN bus and the inverter. Such CM interference may lead to significant degradation in signal quality and possibly total failure of communication on the CAN bus.

The present invention has been devised with the foregoing in mind.

### SUMMARY

According to a first aspect, there is provided a method of operating an electrical system for a vehicle, the electrical system comprising: a controller area network, CAN, bus; a CAN transceiver configured to transmit signals on, and receive signals from, the CAN bus; a non-isolated power supply; and an isolated power supply; the method comprising: switching between operating the electrical system in a first mode and a second mode; wherein: when in the first mode, the CAN bus receives electrical power from the non-isolated power supply; and when in the second mode, the CAN bus receives electrical power from the isolated power supply. The isolated power supply may comprise an inductive coupling (such as a transformer) or a capacitive coupling.

The first mode may be a standby mode or a dormant mode. The second mode may be a running mode or a normal mode. The electrical system may comprise a controller (e.g., a main application controller, MAC). The controller may be communicatively coupled to the CAN bus via the CAN transceiver.

It may be that, when in the first mode, the CAN bus does not receive electrical power from the isolated power supply. It may be that, when in the second mode, the CAN bus does not receive electrical power from the non-isolated power supply.

The electrical system may further comprise a power source. The non-isolated power supply and the isolated power supply may each be electrically coupled to the power source.

It may be that the method comprises switching from the first mode to the second mode in response to a signal on the CAN bus.

The electrical system may comprise a power electronics device communicatively coupled to the CAN bus. It may be that the controller is configured to communicate with the power electronics device via the CAN transceiver and the CAN bus. It may be that the power electronics device is electrically coupled to the power source. The power electronics device may be an inverter. It may be that the inverter is electrically coupled to a rotary electric machine.

It may be that: the non-isolated power supply is a secondary non-isolated power supply; the electrical system further comprises a primary non-isolated power supply; and the isolated power supply is electrically coupled to the primary non-isolated power supply.

It may be that the isolated power supply is electrically coupled to the power source via the primary non-isolated power supply. It may be that the secondary non-isolated power supply is electrically coupled to the power source.

The power source may be a DC power source. Each power supply may include a power converter. Each power converter may be a DC-to-DC power converter. Each power converter may be electrically coupled to the DC power source via a DC link.

According to a second aspect there is provided an electrical system for a vehicle, the electrical system comprising: a controller area network, CAN, bus; a CAN transceiver configured to transmit signals on, and receive signals from, the CAN bus; a non-isolated power supply; an isolated power supply; and means configured to carry out a method in accordance with the first aspect. The electrical system of the second aspect may have any of (e.g., any combination of) the features referred to above in relation to the method of the first aspect.

It may be that the power supplies are configured to carry out, at least in part, the method in accordance with the first aspect. The CAN transceiver may be configured to carry out, at least in part, the method of the first aspect. The power supplies and the CAN transceiver may be configured to cooperate to carry out the method in accordance with the first aspect.

According to a third aspect there is provided a transport refrigeration system comprising an electrical system in accordance with the second aspect.

According to a fourth aspect there is provided a vehicle comprising an electrical system in accordance with the second aspect and/or a transport refrigeration system in accordance with the third aspect.

According to a fifth aspect there is provided a computer program comprising instructions to cause an electrical system in accordance with the second aspect to carry out a method in accordance with the first aspect.

According to a sixth aspect there is provided a computer-readable medium having stored thereon a computer program in accordance with the fifth aspect.

### BRIEF DESCRIPTION OF THE DRAWINGS

**FIG. 1** shows a vehicle comprising a transport refrigeration system;
**FIG. 2** is a schematic diagram of example transport refrigeration unit suitable for use with the vehicle of FIG. 1, the example transport refrigeration unit comprising a vapour-compression refrigeration circuit having a compressor;
**FIG. 3** is a schematic diagram of an example electrical system suitable for use with the transport refrigeration unit of FIG. 2;
**FIG. 4** is a flowchart showing an example method of operating the electrical system of FIG. 3;
**FIG. 5** is a diagram of a computer-readable medium having stored thereon a computer program.

### DETAILED DESCRIPTION

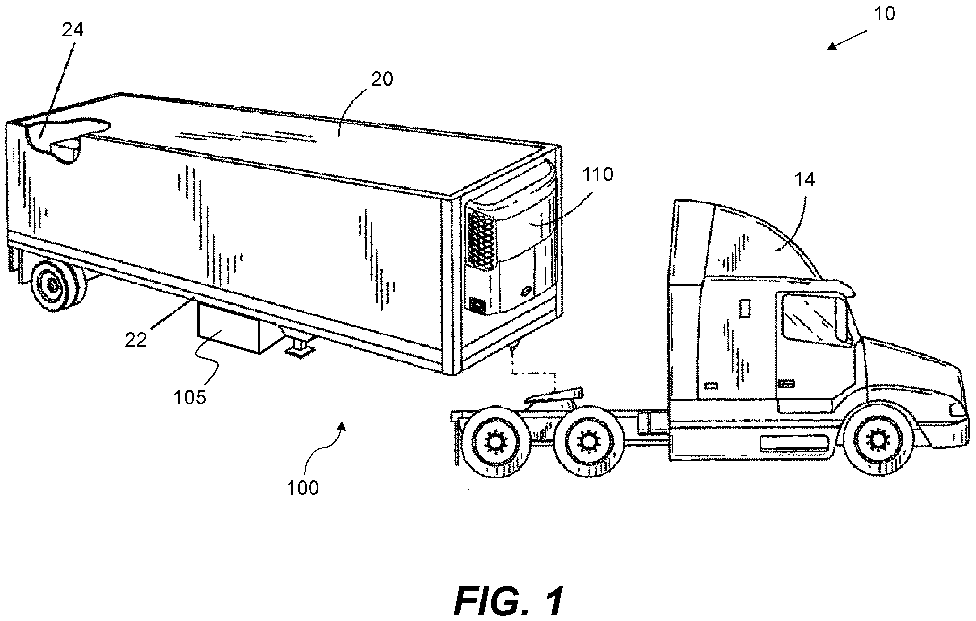

**FIG. 1** shows a vehicle 10 comprising a transport refrigeration system 20. In the example of FIG. 1, the transport refrigeration system 20 forms a part of an over-the-road refrigerated semi-trailer having a structure 22 supporting (or forming) at least one climate-controlled compartment 24 which is configured to be cooled and/or heated by a TRU 110. The climate-controlled compartment 24 can take the form of multiple compartments or have multiple zones. The structure 22 includes a chassis. The vehicle 10 comprises an electrical apparatus 100 which includes various components disposed within an under-chassis box 105. In some examples, one or more components of the electrical apparatus 100 may be integrated or incorporated into the TRU 110. The structure 22 supports the TRU 110 and the under-chassis box 105. The vehicle 10 further comprises a tractor unit 14 removably couplable to the trailer.

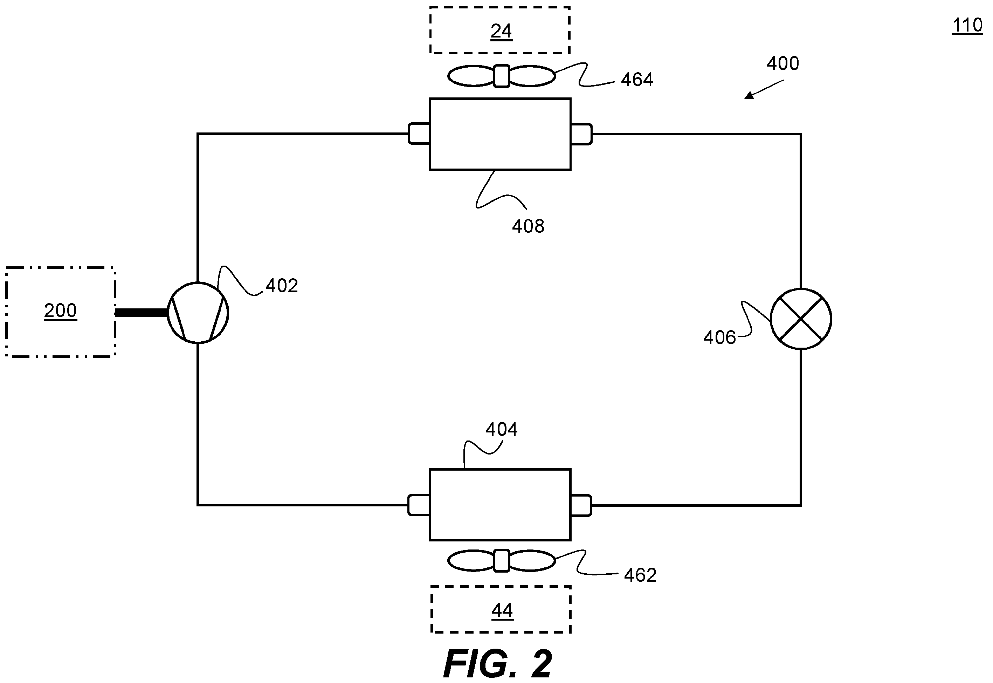

**FIG. 2** schematically shows a diagram of an example TRU 110 suitable for use within the vehicle 10 and the transport refrigeration system 20 of FIG. 1. The TRU 110 comprises a vapour-compression refrigeration circuit 400. The vapour-compression refrigeration circuit 400 includes an evaporator 408 which is configured to receive heat from the climate-controlled compartment 24 of the transport refrigeration system 20 and a condenser 404 which is configured to reject heat to a thermal sink 44 (e.g., ambient air outside of the climate-controlled compartment 24). For these purposes, the vapour-compression refrigeration circuit 400 also includes a compressor 402 and an expansion valve 406. Accordingly, the vapour-compression refrigeration circuit 400 may be controlled to cause heat to be removed from the climate-controlled compartment 24. The TRU 110 also comprises a plurality of fans 462, 464. In the example of FIG. 2, a first fan 462 is associated with (e.g. located in proximity to) the condenser 404 for improving heat transfer at one or more surfaces of the condenser 404, and a second fan 464 is associated with (e.g. located in proximity to) the evaporator 408 for improving heat transfer at one or more surfaces of the evaporator 408.

The compressor 402 is mechanically coupled to, and is therefore configured to be driven by, an electrical system 200. The electrical system 200 may be operated to drive the compressor 402 and thereby control the vapour-compression refrigeration circuit 400. The compressor 402 may be any suitable type of compressor, as will be apparent to those skilled in the art. However, in particular examples, the compressor 402 may be a reciprocating compressor (e.g., a piston compressor) or a scroll compressor.

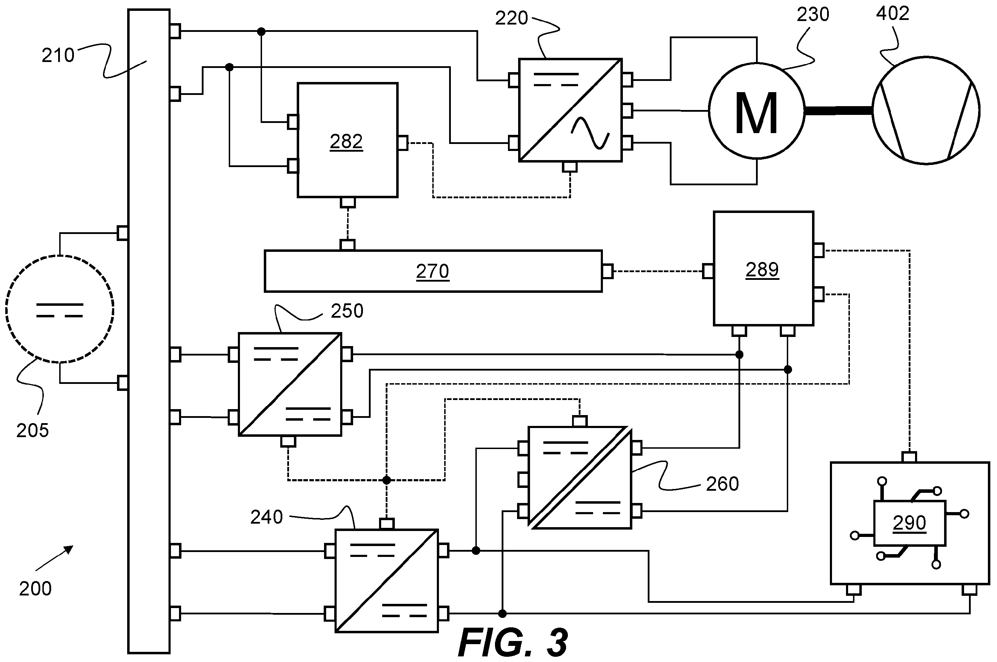

**FIG. 3** is a schematic diagram of an example electrical system 200 which is particularly, but not exclusively, suitable for use with the vapour-compression refrigeration circuit 400 of FIG. 2 and the vehicle 10/transport refrigeration system 20 of FIG. 1. The example electrical system 200 comprises a DC link 210, an inverter 220 (i.e., a type of power electronics device 220), a motor 230, a primary non-isolated power converter 240, a secondary non-isolated power converter 250, an isolated power converter 260, a controller area network (CAN) bus 270, CAN transceivers 282, 289 and a controller (e.g., a main application controller (MAC)) 290. In FIG. 3, communicative couplings between components/devices are shown using dashed lines while electrical couplings between components/devices are shown using solid lines. Each power converter 240, 250, 260 may be more broadly referred to as, or as being included within, a power supply 240, 250, 260 (i.e., a primary non-isolated power supply 240, a secondary non-isolated power supply 250 and an isolated power supply 260). References herein to the non-isolated power converters 240, 250 are to be understood as references to non-isolated power supplies 250, 260 while references herein to the isolated power converter 260 is to be understood as a reference to an isolated power supply 260. This disclosure envisages that a power supply 240, 250, 260 may be provided which does not include a power converter.

The induction/asynchronous motor 230 may be more generally referred to as an electric machine 230 (e.g., a rotary electric machine 230) and the inverter 200 may be referred to as a DC-to-AC power converter 220. The power converters 240, 250, 260 may be referred to as DC-to-DC power converters 240, 250, 260.

The non-isolated DC-to-DC power converters 240, 250 do not provide galvanic isolation between an input side and an output side thereof. The non-isolated DC-to-DC power converters 240, 250 may have a buck, a boost, a buck-boost or a Ćuk topology, as will be appreciated by those skilled in the art. In contrast, the isolated DC-to-DC power converter 260 provides galvanic isolation between an input side and an output side thereof. To this end, the isolated DC-to-DC power converter 260 comprises an inductive coupling such as a transformer (e.g., positioned within a dual active bridge topology), as will be appreciated by those skilled in the art. The isolated DC-to-DC power converter 260 may, in addition or instead, comprise a capacitive coupling as will also be appreciated by those skilled in the art. Such couplings enable non-conductive power transfer therethrough.

The MAC 290 is configured to communicate with the inverter 220 using (e.g., via/by means of) the CAN bus 270 and the CAN transceivers 282, 289. In other words, the MAC 290 is communicatively coupled to the inverter 220 via the CAN bus 270 and the CAN transceivers 282, 289. To this end, the MAC 290 is directly communicatively connected to the CAN transceiver 289 (which may be referred to as the MAC CAN transceiver 289) whereas the inverter is directly communicatively coupled to the CAN transceiver 282 (which may be referred to as the inverter CAN transceiver 282). In turn, the CAN transceivers 282, 289 are each directly communicatively coupled to the CAN bus 270 and thus are configured to transmit signals on, and receive signals from, the CAN bus 270. It will be appreciated that further CAN transceivers (not shown) may be communicatively coupled to the CAN bus 270 to provide communication between further devices (also not shown).

The motor 230 is mechanically coupled to the compressor 402 and is therefore configured to drive the compressor 402. The compressor 402 is directly or indirectly driven by rotation of a rotor of the motor 230 such that the compressor 402 serves as a mechanical load to which the rotor is coupled. By way of example, the motor 230 may be directly mechanically coupled to the compressor 402 via a driveshaft. By way of further example, the motor 230 may be indirectly coupled to the compressor 402 via a transmission comprising a gearbox.

The DC link 210 is configured to receive a DC supply voltage from a DC power source 205. The DC power source 205 may be, or be derived from, an internal power supply (e.g., a fuel-cell pack, a battery or a rectifier coupled to a generator). If so, the DC power source 205 may be disposed within the electrical apparatus 100 of the vehicle 10 shown by FIG. 1 (e.g., within the under-chassis box 105). Otherwise, the DC power source 205 may be, or be derived from, an external power supply (e.g. a shore power supply) which is couplable to the electrical apparatus 100 via an external connection port and appropriate cabling. In particular, the DC power source 205 may be a rectifier which is configured to receive an AC voltage received from the shore power supply. Such a rectifier may be referred to as a grid converter. This disclosure also envisages that the inverter 220 may be coupled to the shore power supply (e.g., instead of the DC link 210) and thus may also be referred to as a grid converter.

The inverter 220 is generally configured to receive an input DC voltage from the DC link 210 and to provide a plurality of output electrical currents (i.e., alternating currents, ACs) and corresponding voltages to the motor 230. The input DC voltage corresponds to the voltage of the DC link 210. Accordingly, the electric motor 230 draws AC electrical power from the inverter 220 in use. The inverter 220 may comprise a plurality of switching devices, at least one inductive element and/or at least one capacitive element arranged in a suitable inverter topology, as will be known to those skilled in the art. As a result, in use, the inverter 220 draws electrical energy from the DC link 210 and thus serves as an electrical load. In other examples, the electrical system 200 may comprise one or more additional electrical load(s) which are configured to draw electrical energy from the DC link 210 and communicatively coupled to the MAC 290 via the CAN bus 270 and the CAN transceiver 289 (as well as additional CAN transceivers as appropriate).

The input side of the primary non-isolated power converter 240 is electrically connected to the DC link 210 and the output side of the primary non-isolated power converter 240 is electrically coupled to the input side of the isolated power converter 260 and to a set of power terminals of the MAC 290. In turn, the output side of the isolated power converter 260 is electrically coupled to a set of power terminals of the MAC CAN transceiver 289. On the other hand, the input side of the secondary non-isolated power converter 250 is electrically connected to the DC link 210 and the output side of the secondary non-isolated power converter 250 is electrically coupled to the set of power terminals of the MAC CAN transceiver 289. Accordingly, the isolated power converter 260 is electrically coupled to the DC power source 205 via the primary non-isolated power converter 240 and the DC link 210 whereas the secondary non-isolated power converter 260 is electrically coupled to the DC power source 205 via the DC link 210 alone. In this way, each power converter 240, 250, 260 is electrically coupled to the DC power source 205 via the DC link 210. Each power converter 240, 250, 260 is also directly communicatively connected to the MAC CAN transceiver 289 as shown by FIG. 3. Further, the MAC 290 is electrically coupled to the DC power source 205 via the primary non-isolated power converter 240 and the DC link 210. The DC link 210 is electrically coupled to a set of power terminals of the inverter CAN transceiver 282.

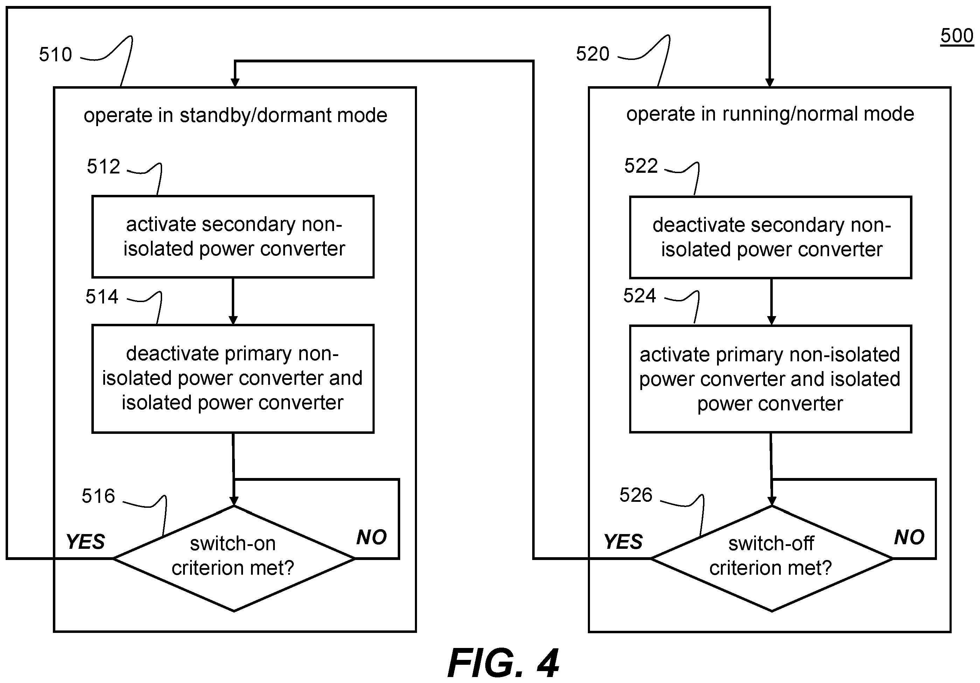

The MAC 290 is generally configured to control operation of (e.g., automatically control operation of) the electrical system 200. More specifically, the MAC 290 is configured to control operation of the electrical system 200 according to methods which are in accordance with the example method described below with reference to FIG. 4. To this end, the MAC 290 is configured to control the power converters 240, 250, 260. The MAC 290 may also be configured to control the inverter 220 by means of the CAN bus 270 and the CAN transceivers 282, 289 (e.g., when the electrical system 200 is in a running/normal mode as described below).

**FIG. 4** shows a method 500 of operating an electrical system in accordance with the electrical system 200 described above with reference to FIG. 3. The method 500 is generally performed by the converters 240, 250, 260, and the converters 240, 250, 260 are provided with (e.g., include) appropriate data-processing apparatus for this purpose in addition to the functionality provided by the CAN transceivers 282, 289. The method 500 includes switching between operating the electrical system 200 in a first mode 510 and operating the electrical system in a second mode 520. The first mode 510 is a standby/dormant mode 510 whereas the second mode 520 is a running/normal mode 520. The switching between the modes 510, 520 is described in further detail below. The method 500 may commence (e.g., begin) by operating the electrical system 200 in the standby/dormant mode 510.

Operating the electrical system 200 in the standby mode/dormant mode 510 includes activating, at block 512, the secondary non-isolated power converter 250 as well as deactivating, at block 514, the primary non-isolated power converter 240 (and optionally also the isolated power converter 260). Consequently, in the standby mode/dormant mode 510, the MAC CAN transceiver 289 receives electrical power from secondary the non-isolated power converter 250 but does not receive electrical power from the isolated power converter 260 (or the primary non-isolated power converter 240). Preferably but optionally, the electrical load(s) of the electrical system 200 are designed/selected to have a sufficiently low power consumption when the electrical system is operated in the standby/formant mode 510 in the standby so that the power source 205 is not deeply discharged even after a relatively long period (e.g., weeks) of inactivity. Appropriate limits to this end for electrical current draw (e.g., consumption) from the DC link 210 of each electrical load, including the inverter 220, are <1 mA or <100 µA.

Operating in the standby mode/dormant mode 510 further includes determining, at block 516, whether a switch-on criterion has been met. The switch-on criterion may be determined to be met if a switch-on signal is present (e.g., has been transmitted) on the CAN bus 270. For this purpose, the MAC CAN transceiver 289 monitors the CAN bus 270 and each converter 240, 250, 260 monitors the MAC CAN transceiver 289 using the respective communicative connection therebetween. Namely, the MAC CAN transceiver 289 may be include (e.g., have) remote wake-up functionality. The CAN transceivers 282, 289 may be configured to provide galvanic isolation between the relevant communicative coupling with the CAN bus 270 (i.e., communication terminals thereof) and the power terminals thereof. Conversely, the switch-on criterion may be determined not to have been met if a switch-on signal is not present on the CAN bus 270. Determination(s) of whether a switch-on signal is present on the CAN bus 270, at block 516, may be carried out in accordance with ISO 11898-5. Otherwise, the switch-on criterion may be determined to be met if it is determined that an external auxiliary power supply cable (e.g., a charging cable) has been connected to the electrical system 200.

If it is determined, at block 516, that the switch-on criterion is not met, the method 500 causes the electrical system 200 to remain in the standby mode/dormant mode 510 and then returns to determining, at block 516 whether the switch-on criterion has been met such that the meeting or failure to meet the switch-on criterion is repeatedly determined. Conversely, if it is determined, at block 516, that the switch-on criterion is has been met, the method 500 causes the electrical system to switch from operating in the standby mode/dormant mode 510 to operating in the in the running/normal mode 520.

Operating the electrical system 200 in the running/normal mode 520 includes activating, at block 522, the primary non-isolated power converter 240 and the isolated power converter 260 as well as deactivating, at block 524, the secondary non-isolated power converter 250. It follows that, in the standby mode/dormant mode 520, the MAC CAN transceiver 289 receives electrical power from the isolated power converter 260 (and the primary non-isolated power converter 240) but does not receive electrical power from secondary the non-isolated power converter 250.

Operating in the running/normal mode 520 further includes determining, at block 526, whether a switch-off criterion has been met. The switch-off criterion may be determined to be met if a switch-off signal is present (e.g., has been transmitted) on the CAN bus 270. On the other hand, the switch-off criterion may be determined not to have been met if a switch-off signal is not present on the CAN bus 270. Otherwise, the switch-off criterion may be determined to be met if a predetermined time has elapsed since the electrical system 200 was switching into operating in the running/normal mode 520.

If it is determined, at block 526, that the switch-off criterion is not met, the method 500 includes remaining in the standby mode/dormant mode 520 and returning to determining, at block 526 whether the switch-off criterion is met such that the meeting or failure to meet the switch-off criterion is repeatedly determined. Conversely, if it is determined, at block 526, that the switch-off criterion is met, the method 500 causes the electrical system to switch from operating in the running/normal mode 520 to operating in the in the standby/formant mode 510.

In previously-considered electrical systems, common mode (CM) interference on the CAN bus may develop when a load communicatively coupled to the CAN bus (e.g., an inverter) is running and a closed loop (e.g., a ground loop) is formed between the CAN bus and the load. Such CM interference may lead to significant degradation in signal quality and possibly total failure of communication on the CAN bus.

In methods and systems in accordance with the present disclosure, the MAC CAN transceiver 289 receives electrical power from an isolated power converter during the running/normal mode, which inhibits (e.g., prevents) the formation of closed loops and thus reduces (e.g., eliminates) CM interference thereon and improves signal quality. In contrast, the MAC CAN transceiver 289 receives electrical power from a non-isolated power converter during the standby/dormant mode, thus reducing power consumption. In this way, methods and systems in accordance with the present disclosure provide a balance between communication quality (e.g., signal quality) and power consumption. It will be understood that, in the present disclosure, references to the CAN transceiver 289 receiving electrical power encompass/result in the CAN bus 270 indirectly receiving electrical power as the CAN transceiver 289 transmits signals on/receives signals from the CAN bus 270 using the electrical power received thereby.

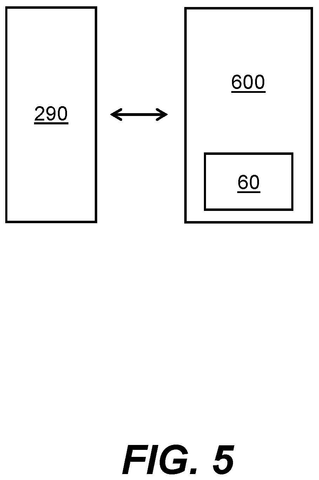

**FIG. 5** shows, highly schematically, a non-transitory computer-readable (e.g., machine-readable) medium 600 having stored thereon a computer program 60 comprising instructions which, when executed by the converters 240, 250, 260 provided to an electrical system in accordance with the example electrical system 200 as described above with reference to FIG. 3, cause the converters 240, 250, 260 to execute (e.g., carry out) the method 500 described above with reference to FIG. 4. The computer program 60 may be software or firmware or be a combination of software and firmware as applied to hardware.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein. Moreover, while the present disclosure is made with in the context of transport refrigeration systems and/or vapour-compression circuits, it will be appreciated that the present disclosure has other possible applications in other technical areas.

The controller(s) described herein may comprise a processor. The controller and/or the processor may comprise any suitable circuity to cause performance of the methods described herein and as illustrated in the drawings. The controller or processor may comprise: at least one application specific integrated circuit (ASIC); and/or at least one field programmable gate array (FPGA); and/or single or multi-processor architectures; and/or sequential (Von Neumann)/parallel architectures; and/or at least one programmable logic controllers (PLCs); and/or at least one microprocessor; and/or at least one microcontroller; and/or a central processing unit (CPU), to perform the methods and or stated functions for which the controller or processor is configured.

## Claims

1. A method of operating an electrical system for a vehicle, the electrical system comprising: a controller area network, CAN, bus; a CAN transceiver configured to transmit signals on, and receive signals from, the CAN bus; a non-isolated power supply; and an isolated power converter, the method comprising:
switching between operating the electrical system in a first mode and a second mode, wherein:
when in the first mode, the CAN transceiver receives electrical power from the non-isolated power supply; and
when in the second mode, the CAN transceiver receives electrical power from the isolated power supply.

2. The method of claim 1, wherein the first mode is a standby mode or a dormant mode.

3. The method of claim 1 or claim 2, wherein the second mode is a running mode or a normal mode.

4. The method of any preceding claim, wherein:
when in the first mode, the CAN transceiver does not receive electrical power from the isolated power supply.

5. The method of any preceding claim, wherein:
when in the second mode, the CAN transceiver does not receive electrical power from the non-isolated power supply.

6. The method of any preceding claim, wherein:
the electrical system further comprises a power source; and
the non-isolated power supply and the isolated power supply are each electrically coupled to the power source.

7. The method of any preceding claim, wherein the isolated power supply comprises an inductive coupling or a capacitive coupling.

8. The method of any preceding claim, wherein the method comprises switching from the first mode to the second mode in response to a signal on the CAN bus.

9. The method of any preceding claim, wherein the electrical system comprises a power electronics device communicatively coupled to the CAN bus.

10. The method of claim 9, wherein the power electronics device is an inverter.

11. The method of any preceding claim, wherein:
the non-isolated power supply is a secondary non-isolated power supply;
the electrical system further comprises a primary non-isolated power supply; and
the isolated power converter is electrically coupled to the primary non-isolated power supply.

12. An electrical system for a vehicle, the electrical system comprising: a controller area network, CAN, bus; a CAN transceiver configured to transmit signals on, and receive signals from, the CAN bus; a non-isolated power supply; an isolated power supply; and means configured to carry out the method of any preceding claim.

13. A vehicle comprising the electrical system of claim 12.

14. A computer program comprising instructions to cause the electrical system of claim 12 to carry out the method of any of claims 1 to 11.

15. A computer-readable medium having stored thereon the computer program of claim 14.
